# EUROPEAN PATENT APPLICATION

(11) **EP 3 437 764 A1**
(43) Date of publication of application: **06.02.2019**
(21) Application number: 18184875.5
(22) Date of filing: 23.07.2018
(51) Int. Cl.: B22F 3/105

(54) **AUTOMATIC POWDER COMPACTION**

(30) Priority: 31.07.2017 US 201715664861
(71) Applicant: General Electric Company, Schenectady, NY 12345 (US)
(72) Inventor: MAMRAK, Justin, 96049 Bamberg (DE)
(74) Representative: Foster, Christopher Michael

(57) **Abstract**

The present disclosure generally relates to powder packing for additive manufacturing (AM) methods (400) and systems (300). Conventional powder packing methods have focused on leveling the bulk powder cone in the powder reservoir. Moreover, such methods may be manual and non-standardized, and they result in operator fatigue and potentially product inconsistencies. Powder packing according to the present disclosure improves standardization and reduces turnaround time, with the potential to lower the cost of AM.

## Description

### INTRODUCTION

The present disclosure generally relates to powder packing methods for use in powder-based additive manufacturing (AM) methods and systems.

### BACKGROUND

AM or additive printing processes generally involve the buildup of one or more materials to make a net or near net shape (NNS) object, in contrast to subtractive manufacturing methods. Though "additive manufacturing" is an industry standard term (ASTM F2792), AM encompasses various manufacturing and prototyping techniques known under a variety of names, including freeform fabrication, 3D printing, rapid prototyping/tooling, etc. AM techniques are capable of fabricating complex components from a wide variety of materials. Generally, a freestanding object can be fabricated from a computer aided design (CAD) model. A particular type of AM process uses electromagnetic radiation, such as a laser beam, to sinter or melt a powdered metal material, creating a solid three-dimensional object. Powder-based methods such as direct metal laser melting (DMLM) and selective laser melting (SLM) have been used to produce objects for a variety of industries.

Selective laser sintering, direct laser sintering, selective laser melting, and direct laser melting are common industry terms used to refer to producing three-dimensional (3D) objects by using a laser beam to sinter or melt a fine powder. For example, U.S. Patent Number 4,863,538 and U.S. Patent Number 5,460,758 describe conventional laser sintering techniques. More accurately, sintering entails fusing (agglomerating) particles of a powder at a temperature below the melting point of the powder material, whereas melting entails fully melting particles of a powder to form a solid homogeneous mass. The physical processes associated with laser sintering or laser melting include heat transfer to a powder material and then either sintering or melting the powder material. Although the laser sintering and melting processes can be applied to a broad range of powder materials, the scientific and technical aspects of the production route, for example, sintering or melting rate and the effects of processing parameters on the microstructural evolution during the layer manufacturing process have not been well understood. This method of fabrication is accompanied by multiple modes of heat, mass and momentum transfer, and chemical reactions that make the process very complex.

Prior attempts to pack powder into the powder reservoir, or dosing chamber, have focused on leveling the bulk powder cone within the chamber. Figs. 1-2 show two systems described in German Patent Application DE 102012008664 A1. In Fig. 1, the cross-section of the cover plate 115 is adapted to the internal cross-section of the dosing chamber 103, which allows it to be placed into the dosing chamber 103. In this way, it can press the bulk cones in the interior of the dosing chamber, while avoiding excess powder being pushed out over the edge region of the dosing chamber when the cover plate flattens the bulk cone. Vibration can be introduced into the cover plate 115. In order to smooth the surface of the building material, it is possible to provide vibration elements on the cover plate 115. As soon as the uppermost part of the bulk cone has been removed due to the vibrating cover plate 115, the cover plate 115 is further inserted into the dosing chamber 103 until the contact with the bulk cone again occurs. This allows the bulk cone to be graduated step by step.

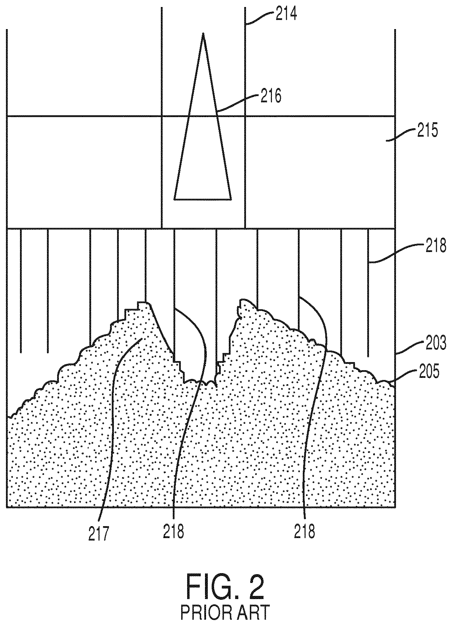

Fig. 2 shows an alternative where a plurality of gas supply elements 218 are arranged on the underside of the cover plate 215. The gas feed elements 218 have a lance shape so that they can be immersed in the bulk cone 217 formed from the building material. By introducing the gas into the gas supply elements 218, the bulk cone 217 is whirled up and is thereby buried. For pressure compensation, an opening, which is sealed with a filter, can be located in the cover plate 215, which opening seals the dosing chamber 203 in a powder-tight manner. Therefore, only the gas introduced into the dosing chamber 203 can leave the dosing chamber 203, but not the construction material 205. The gas supply elements 218 are arranged with a particular advantage in a circular manner; they can also consist of a plurality of concentric circles. The center of these circles is the center of the outlet cone 216, the circle or the circles of gas supply elements 218 are arranged in such a way that respectively below the opening of the cover plate 215 through which the building material 205 falls into the dosing chamber 203.

Such methods along with known manual powder packing methods, e.g., with a trowel, can result in non-uniform packing density within the powder reservoir. Moreover, these techniques are often slow and can lead to operator fatigue and variation between batches. Accordingly, improved systems and method are needed to quickly and consistently pack powder into the powder reservoir.

### SUMMARY

The following presents a simplified summary of one or more aspects of the present disclosure in order to provide a basic understanding of such aspects. This summary is not an extensive overview of all contemplated aspects and is intended to neither identify key or critical elements of all aspects nor delineate the scope of any or all aspects. Its purpose is to present some concepts of one or more aspects in a simplified form as a prelude to the more detailed description that is presented later.

In one aspect, the present disclosure relates a method for preparing powder to be used in additive manufacturing. The method includes the steps of: a) determining a packing density for a powder in a powder reservoir based on one or more packing factors; and b) concussing the powder reservoir until the powder achieves the packing density. Concussing the powder reservoir includes vertically oscillating a bottom plate of the powder reservoir, and vertically oscillating the bottom plate of the powder reservoir includes activating a stepper motor, a servomotor, or a hydraulic motor to cause the bottom plate of the powder reservoir to vertically oscillate. In some embodiments, an amplitude or frequency of concussing the powder reservoir is based on a type of material of the powder.

In some embodiments, the one or more packing factors include at least one of a height of the powder, a weight of the powder, or a density of the powder.

In further embodiments, the method also includes measuring a density of the powder to determine whether the powder achieved the packing density. In some aspects, measuring the density of the powder includes at least one of measuring a resistance of the powder or measuring a weight-to-quantity ratio of the powder.

In a second aspect, the present disclosure relates a system for preparing powder to be used in additive manufacturing. The system includes a memory that stores instructions for executing processes for preparing the powder to be used in additive manufacturing, and a processor configured to execute the instructions. The processor is configured to: a) determine a packing density for a powder in a powder reservoir based on one or more packing factors; and b) generate a control signal that is provided to a powder packing apparatus, wherein the control signal causes a motor of the powder packing apparatus to concuss the powder reservoir until the powder achieves the packing density. In some embodiments, the control signal causes a bottom plate of the powder reservoir to vertically oscillate, and the control signal also activates a stepper motor, a servomotor, or a hydraulic motor to cause the bottom plate of the powder reservoir to vertically oscillate. In further embodiments, the processor is further configured to determine an amplitude or frequency for concussing the powder reservoir based on a type of material of the powder.

In some embodiments, the one or more packing factors comprises at least one of a height of the powder, a weight of the powder, or a density of the powder.

In further embodiments, the processor is further configured to measure a density of the powder to determine whether the powder achieved the packing density, and, in order to measure the density of the powder, the processor is further configured to measure a resistance of the powder or measure a weight-to-quantity ratio of the powder.

In a third aspect, the present disclosure relates to a non-transitory computer-readable storage medium containing executable computer program code. The code includes instructions configured to: a) determine a packing density for a powder in a powder reservoir based on one or more packing factors; and b) generate a control signal that is provided to a powder packing apparatus, wherein the control signal causes a motor of the powder packing apparatus to concuss the powder reservoir until the powder achieves the packing density. In some embodiments, the control signal causes a bottom plate of the powder reservoir to vertically oscillate by activating a stepper motor, a servomotor, or a hydraulic motor. In further embodiments, the code further comprises instructions configured to determine an amplitude or frequency for concussing the powder reservoir based on a type of material of the powder.

In some embodiments, the one or more packing factors comprises at least one of a height of the powder, a weight of the powder, or a density of the powder.

In further embodiments, the code further comprises instructions configured to measure a density of the powder to determine whether the powder achieved the packing density, and, to measure the density of the powder, the code further comprises instructions configured to measure a resistance of the powder or measure a weight-to-quantity ratio of the powder.

These and other aspects of the disclosure will become more fully understood upon a review of the detailed description, which follows.

### BRIEF DESCRIPTION OF THE DRAWINGS

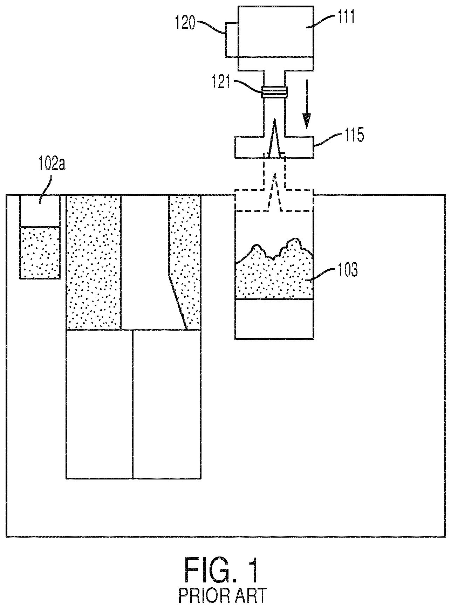

Fig. 1 shows a conventional powder packing apparatus including a cover plate.
Fig. 2 shows a conventional powder packing apparatus including gas supply elements.
Fig. 3 shows an exemplary powder bed apparatus for additive manufacturing, in accordance with aspects of the present disclosure.
Fig. 4 illustrates a method of preparing powder to be used in additive manufacturing, in accordance with aspects of the present disclosure.
Fig. 5 illustrates various features of an example computer system, in accordance with aspects of the present disclosure.

**DETAILED DESCRIPTION**

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components are shown in block diagram form in order to avoid obscuring such concepts.

The present application is directed to automated methods of preparing powder to be used in additive manufacturing. Such methods differ from conventional powder preparation methods by eliminating the need for external hardware to pack the powder to be used in additive manufacturing. By using existing machinery, the present disclosure also reduces material cost from a machine design or build standpoint. Aspects of the present disclosure may also be used to provide a more consistent compaction of powder and the elimination of human error when compacting the powder.

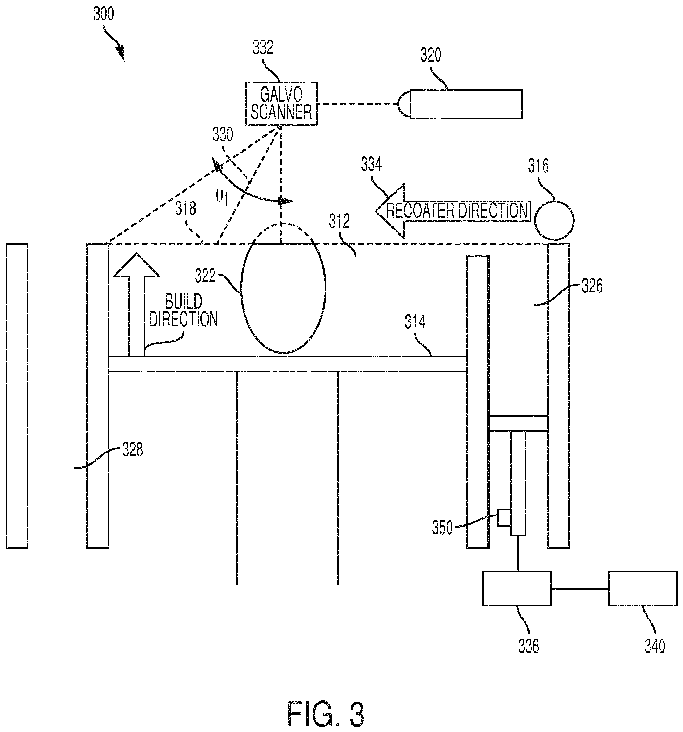

FIG. 3 is schematic diagram showing a cross-sectional view of an exemplary conventional system 300 for direct metal laser sintering (DMLS) or direct metal laser melting (DMLM). The apparatus 300 builds objects, for example, the part 322, in a layer-by-layer manner by sintering or melting a powder material (not shown) using an energy beam 330 generated by a source such as a laser 320. The powder to be melted by the energy beam is supplied by a powder reservoir 326. The powder reservoir is also sometimes referred to as the powder dosing chamber. The powder is spread evenly over a build plate 314 using a recoater arm 316 travelling in direction 334 to maintain the powder at a level 318 and remove excess powder material extending above the powder level 318 to waste container 328. The energy beam 330 sinters or melts a cross sectional layer of the object being built under control of the galvo scanner 332. The build plate 314 is lowered and another layer of powder is spread over the build plate and object being built, followed by successive melting/sintering of the powder by the laser 320. The process is repeated until the part 322 is completely built up from the melted/sintered powder material.

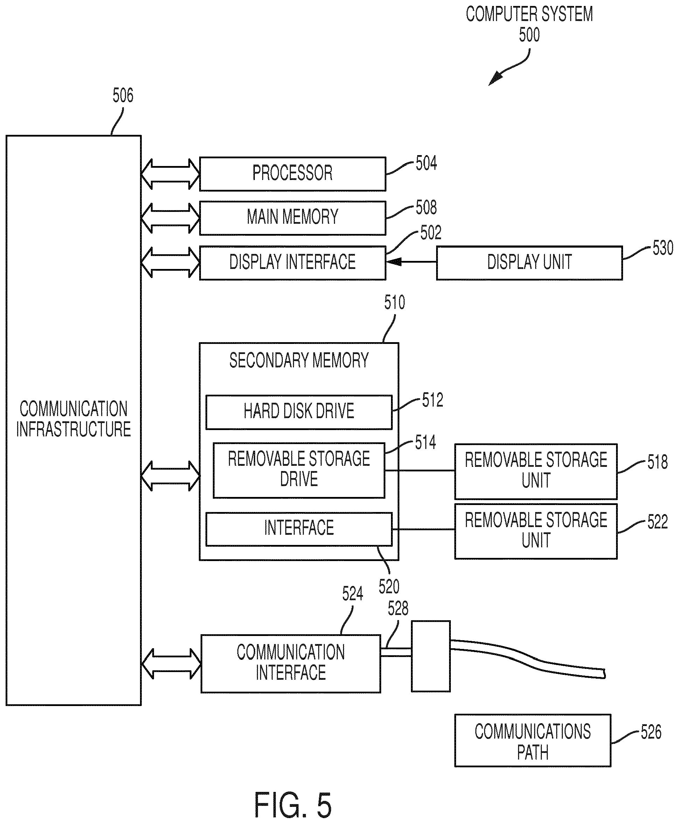

In some aspects, movements of the powder reservoir 326 may be controlled by a motor 336 via a computer system 340, e.g., the computer system of shown in Fig. 5. For example, the powder reservoir 326 may be concussed to control a packing density of the powder deposited therein. In some aspects, the packing density may be based on one or more packing factors, such as, but not limited to a height of the powder, a weight of the powder, and/or a density of the powder. To achieve this, the computer system 340 may generate a control signal that is provided to the motor 336, such that the motor 336 controls the movement of the powder reservoir 326. For example, the motor 336 may concuss the powder reservoir 326 by vibrating the floor and/or sidewalls of the powder reservoir 326. Additionally, or alternatively, the motor 336 may concuss the powder reservoir by vertically oscillating the floor of the powder reservoir. Thus, in some aspects, in order to concuss the powder reservoir 326, the control signal may cause the motor 336 to vibrate and/or vertically oscillate the powder reservoir 326. In some aspects, the motor 336 may be a stepper motor, a servomotor, or a hydraulic motor.

In some aspects of the present disclosure, the computer 340 may also cause an vibration mechanism 350 attached to the powder reservoir 326 to concuss the powder reservoir 326. To achieve this, the computer 340 may transmit the control signal to the vibration mechanism, such that the vibration mechanism 350 may cause concuss the floor and/or sidewalls of the powder reservoir 326.

In further aspects, the control signal may also indicate an amplitude of and/or a frequency of the concussions of the powder reservoir 326. That is, the control signal may indicate the amplitude of and/or the frequency of the vibrations and/or the oscillations at which the motor 336 may concuss the powder reservoir 326. To achieve this, the computer system 340 may calculate the amplitude and/or the frequency based on a type of material being used for fabrication. For example, powders having a higher density (e.g., nickel based alloys) may be concussed at a higher amplitude and/or frequency than powders having a lower density (e.g., aluminum based alloys).

In further aspects, the control signal may also indicate a predetermined amount of time to concuss the powder reservoir 326 in order to achieve the packing density. To achieve this, the computer system 340 may calculate the predetermined amount of time based on the type of material being used for fabrication. The computer system 340 may also calculate the predetermined amount of time based on the amplitude and/or the frequency of the concussions. For example, the predetermined amount of time may be longer when the amplitude and/or frequency is low, and the predetermined amount of time may be shorter when the amplitude and/or frequency is high.

In some aspects, the computer system 340 may measure a density of the powder deposited in the powder reservoir to confirm that the desired packing density has been achieved. For example, the density may be measured by determining the resistance of the powder and/or measuring a weight-to-height ratio of the powder. In some aspects, when the desired packing density has not been achieved, the computer system 340 may further calculate amount of time to concuss the powder reservoir 326 in order to achieve the packing density. In some aspects, the computer system 340 may calculate the additional time in the same manner as described with respect to the predetermined amount of time to concuss the powder reservoir 326.

In some aspects, the powder may be packed before commencing fabrication of an object. Additionally, or alternatively, the powder may be packed during fabrication as a process correction.

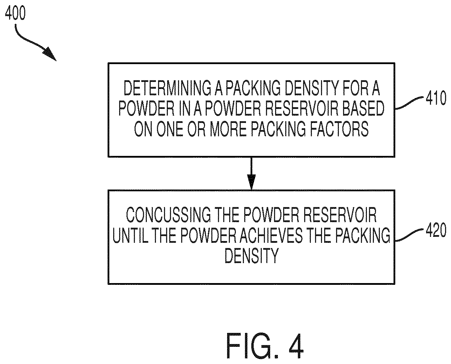

Fig.4 illustrates a method of preparing powder to be used in additive manufacturing. The method 400 includes determining a packing density for a powder in a powder reservoir based on one or more packing factors 410, and concussing the powder reservoir until the powder achieves the packing density 420.

Aspects of the present invention may be implemented using hardware, software, or a combination thereof and may be implemented in one or more computer systems or other processing systems. In an aspect of the present invention, features are directed toward one or more computer systems capable of carrying out the functionality described herein. An example of such a computer system 500 is shown in Fig. 5.

Computer system 500 includes one or more processors, such as processor 504. The processor 504 is connected to a communication infrastructure 506 (e.g., a communications bus, cross-over bar, or network). Various software aspects are described in terms of this example computer system. After reading this description, it will become apparent to a person skilled in the relevant art(s) how to implement aspects of the invention using other computer systems and/or architectures.

Computer system 500 can include a display interface 502 that forwards graphics, text, and other data from the communication infrastructure 506 (or from a frame buffer not shown) for display on a display unit 530. Computer system 500 also includes a main memory 508, preferably random access memory (RAM), and may also include a secondary memory 510. The secondary memory 510 may include, for example, a hard disk drive 512, and/or a removable storage drive 514, representing a floppy disk drive, a magnetic tape drive, an optical disk drive, a universal serial bus (USB) flash drive, etc. The removable storage drive 514 reads from and/or writes to a removable storage unit 518 in a well-known manner. Removable storage unit 518 represents a floppy disk, magnetic tape, optical disk, USB flash drive etc., which is read by and written to removable storage drive 514. As will be appreciated, the removable storage unit 518 includes a computer usable storage medium having stored therein computer software and/or data.

Alternative aspects of the present invention may include secondary memory 510 and may include other similar devices for allowing computer programs or other instructions to be loaded into computer system 500. Such devices may include, for example, a removable storage unit 522 and an interface 520. Examples of such may include a program cartridge and cartridge interface (such as that found in video game devices), a removable memory chip (such as an erasable programmable read only memory (EPROM), or programmable read only memory (PROM)) and associated socket, and other removable storage units 522 and interfaces 520, which allow software and data to be transferred from the removable storage unit 522 to computer system 500.

Computer system 500 may also include a communications interface 524. Communications interface 524 allows software and data to be transferred between computer system 500 and external devices. Examples of communications interface 524 may include a modem, a network interface (such as an Ethernet card), a communications port, a Personal Computer Memory Card International Association (PCMCIA) slot and card, etc. Software and data transferred via communications interface 524 are in the form of signals 528, which may be electronic, electromagnetic, optical or other signals capable of being received by communications interface 524. These signals 528 are provided to communications interface 524 via a communications path (e.g., channel) 526. This path 526 carries signals 528 and may be implemented using wire or cable, fiber optics, a telephone line, a cellular link, a radio frequency (RF) link and/or other communications channels. In this document, the terms "computer program medium" and "computer usable medium" are used to refer generally to media such as a removable storage drive 518, a hard disk installed in hard disk drive 512, and signals 528. These computer program products provide software to the computer system 500. Aspects of the present invention are directed to such computer program products.

Computer programs (also referred to as computer control logic) are stored in main memory 508 and/or secondary memory 510. Computer programs may also be received via communications interface 524. Such computer programs, when executed, enable the computer system 500 to perform the features in accordance with aspects of the present invention, as discussed herein. In particular, the computer programs, when executed, enable the processor 504 to perform the features in accordance with aspects of the present invention. Accordingly, such computer programs represent controllers of the computer system 500.

In an aspect of the present invention where the invention is implemented using software, the software may be stored in a computer program product and loaded into computer system 500 using removable storage drive 514, hard drive 512, or communications interface 520. The control logic (software), when executed by the processor 504, causes the processor 504 to perform the functions described herein. In another aspect of the present invention, the system is implemented primarily in hardware using, for example, hardware components, such as application specific integrated circuits (ASICs). Implementation of the hardware state machine so as to perform the functions described herein will be apparent to persons skilled in the relevant art(s).

In yet another aspect of the present invention, the invention may be implemented using a combination of both hardware and software.

The methods and apparatus of the present disclosure may be used with any powder-based additive manufacturing methods and apparatuses, such as DMLM or SLM. The methods and apparatus of the present disclosure may be used with any powder material; preferably, the powder does not react with the material(s) from which the apparatus is made.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims. Aspects from the various embodiments described, as well as other known equivalents for each such aspect, can be mixed and matched by one of ordinary skill in the art to construct additional embodiments and techniques in accordance with principles of this application.

Various aspects and embodiments of the present invention are defined by the following clauses
1. A method for preparing powder to be used in additive manufacturing, comprising:
   a) determining a packing density for a powder in a powder reservoir based on one or more packing factors; and
   b) concussing the powder reservoir until the powder achieves the packing density.
2. The method of clause 1, wherein concussing the powder reservoir comprises vertically oscillating a bottom plate of the powder reservoir.
3. The method of clause 2, wherein vertically oscillating the bottom plate of the powder reservoir comprises activating a stepper motor, a servomotor, or a hydraulic motor to cause the bottom plate of the powder reservoir to vertically oscillate.
4. The method of clause 2, wherein an amplitude or frequency of concussing the powder reservoir is based on a type of material of the powder.
5. The method of clause 1, wherein the one or more packing factors comprises at least one of a height of the powder, a weight of the powder, or a density of the powder.
6. The method of clause 1, further comprising measuring a density of the powder to determine whether the powder achieved the packing density.
7. The method of clause 6, wherein measuring the density of the powder comprises at least one of measuring a resistance of the powder or measuring a weight-to-quantity ratio of the powder.
8. A system for preparing powder to be used in additive manufacturing, comprising:
   a memory that stores instructions for executing processes for preparing the powder to be used in additive manufacturing; and
   a processor configured to execute the instructions, wherein the processor is configured to:
      a) determine a packing density for a powder in a powder reservoir based on one or more packing factors; and
      b) generate a control signal that is provided to a powder packing apparatus, wherein the control signal causes a motor of the powder packing apparatus to concuss the powder reservoir until the powder achieves the packing density.
9. The system of clause 8, wherein the control signal causes a bottom plate of the powder reservoir to vertically oscillate.
10. The system of clause 9, wherein the control signal activates a stepper motor, a servomotor, or a hydraulic motor to cause the bottom plate of the powder reservoir to vertically oscillate.
11. The system of clause 9, wherein the processor is further configured to determine an amplitude or frequency for concussing the powder reservoir based on a type of material of the powder.
12. The system of clause 8, wherein the one or more packing factors comprises at least one of a height of the powder, a weight of the powder, or a density of the powder.
13. The system of clause 8, wherein the processor is further configured to measure a density of the powder to determine whether the powder achieved the packing density.
14. The system of clause 13, wherein, to measure the density of the powder, the processor is further configured to measure a resistance of the powder or measure a weight-to-quantity ratio of the powder.
15. A non-transitory computer-readable storage medium containing executable computer program code, the code comprising instructions configured to:
   a) determine a packing density for a powder in a powder reservoir based on one or more packing factors; and
   b) generate a control signal that is provided to a powder packing apparatus, wherein the control signal causes a motor of the powder packing apparatus to concuss the powder reservoir until the powder achieves the packing density.
16. The medium of clause 15, wherein the control signal causes a bottom plate of the powder reservoir to vertically oscillate by activating a stepper motor, a servomotor, or a hydraulic motor.
17. The medium of clause 16, wherein the code further comprises instructions to:
   determine an amplitude or frequency for concussing the powder reservoir based on a type of material of the powder.
18. The medium of clause 15, wherein the one or more packing factors comprises at least one of a height of the powder, a weight of the powder, or a density of the powder.
19. The medium of clause 15, wherein the code further comprises instructions configured to:
   measure a density of the powder to determine whether the powder achieved the packing density.
20. The medium of clause 19, wherein, to measure the density of the powder, the code further comprises instructions configured to:
   measure a resistance of the powder or measure a weight-to-quantity ratio of the powder.

## Claims

1. A method for preparing powder to be used in additive manufacturing, comprising:
a) determining a packing density for a powder in a powder reservoir based on one or more packing factors (410); and
b) concussing the powder reservoir until the powder achieves the packing density (420).

2. The method of claim 1, wherein concussing the powder reservoir comprises vertically oscillating a bottom plate of the powder reservoir.

3. The method of claim 2, wherein vertically oscillating the bottom plate of the powder reservoir comprises activating a stepper motor, a servomotor, or a hydraulic motor to cause the bottom plate of the powder reservoir to vertically oscillate.

4. The method of claim 2 or 3, wherein an amplitude or frequency of concussing the powder reservoir is based on a type of material of the powder.

5. The method of any one of claims 1-4, wherein the one or more packing factors comprises at least one of a height of the powder, a weight of the powder, or a density of the powder.

6. The method of any one of claims 1-4, further comprising measuring a density of the powder to determine whether the powder achieved the packing density.

7. The method of claim 6, wherein measuring the density of the powder comprises at least one of measuring a resistance of the powder or measuring a weight-to-quantity ratio of the powder.

8. A system (500) for preparing powder to be used in additive manufacturing, comprising:
a memory (508) that stores instructions for executing processes for preparing the powder to be used in additive manufacturing; and
a processor (504) configured to execute the instructions, wherein the processor is configured to:
a) determine a packing density for a powder in a powder reservoir based on one or more packing factors; and
b) generate a control signal that is provided to a powder packing apparatus, wherein the control signal causes a motor of the powder packing apparatus to concuss the powder reservoir until the powder achieves the packing density.

9. The system of claim 8, wherein the control signal causes a bottom plate of the powder reservoir to vertically oscillate.

10. The system of claim 9, wherein the control signal activates a stepper motor, a servomotor, or a hydraulic motor to cause the bottom plate of the powder reservoir to vertically oscillate.

11. The system of claim 9 or 10, wherein the processor is further configured to determine an amplitude or frequency for concussing the powder reservoir based on a type of material of the powder.

12. The system of any one of claims 8-11, wherein the one or more packing factors comprises at least one of a height of the powder, a weight of the powder, or a density of the powder.

13. The system of any one of claims 8-11, wherein the processor is further configured to measure a density of the powder to determine whether the powder achieved the packing density.

14. The system of claim 13, wherein, to measure the density of the powder, the processor is further configured to measure a resistance of the powder or measure a weight-to-quantity ratio of the powder.

15. A non-transitory computer-readable storage medium (518, 512) containing executable computer program code, the code comprising instructions configured to:
a) determine a packing density for a powder in a powder reservoir based on one or more packing factors; and
b) generate a control signal that is provided to a powder packing apparatus, wherein the control signal causes a motor of the powder packing apparatus to concuss the powder reservoir until the powder achieves the packing density.
